# EUROPEAN PATENT APPLICATION

(11) **EP 1 262 931 A1**
(43) Date of publication of application: **04.12.2002**
(21) Application number: 01113436.8
(22) Date of filing: 01.06.2001
(51) Int. Cl.: G08B 5/22

(54) **Improvements in text messaging**

(71) Applicant: SIEMENS AKTIENGESELLSCHAFT, 80333 München (DE)
(72) Inventor: Kaebling, Michael, Dr., 81739 München (DE)

(57) **Abstract**

In mobile communications, it is desirable to reduce the length of text messages while conveying the same amount of information. There is provided an electronic text messaging system suitable for communicating text messages in an abbreviated or coded form and subsequently expanding the abbreviated or coded form of the messages upon receipt. The system includes a receiving apparatus. The receiving apparatus receives a coded message, decodes the coded message and displays the message on a display device after decoding. The decoding function is performed with reference to an electronic code book module. The code book module forms part of a text messaging program which runs on processor logic provided in the receiving apparatus. The code book module provides a replacement in plain text for each code word of the coded messages. The code words of the coded message are restricted to alphanumeric format to enable transcription by hand and later "off-line" decoding.

## Description

The present invention relates to improvements in text messaging. In particular, the present invention relates to a system for reducing the length of text messages while conveying the same amount of information and retaining comprehensibility.

Text messaging is well-known in many fields of telecommunications, including wired telecommunications, mobile telephony, pager services and more recently services for portable digital assistants (PDAs). Text-based messaging in wireless telecommunications systems, taking place between one user's mobile unit to another user's unit over a wireless communications network, is of particular interest to telecommunications service providers.

Throughout this description wired telecommunications refers to the provision of wired communications networks, for example, fixed telephone systems and wired computer networks. The "wires" of such networks may be copper wires, optical cables, coaxial cables, even power-line cables. Text messaging systems for fixed telephone systems include Minicom and increasingly Short Message Service (SMS). Text messaging on wired computer networks includes facilities for email, internet chat and SMS emulation.

Wireless communications refers to systems provided on wireless communications networks, for example mobile telephony and pager services. The media for wireless communications may be radio, infrared or even ultrasound. Mobile telephone networks generally make use of radio communications. Signals are transmitted from one user device and intercepted by a nearby base station. The nearby base station then relays the signal either directly to the intended receiving user device or to a remote station which is closer to the intended receiving user device. The signal is generally encoded and interleaved to facilitate transmission error correction and to enhance privacy. Each base station can handle only a limited number and volume of calls simultaneously without degradation to the service.

It is known for text messages to be sent from a wired network to devices on a wireless network and vice versa, for example, from a PC to a mobile telephone and back. Generally, a connection is made been wired and wireless networks at either base stations or at a base station controller.

The physical restrictions imposed upon mobile telephony service providers, including limited bandwidth and active user numbers, also apply to text messaging services in all wireless communications networks. Shorter messages generally use less bandwidth and thus allow a greater number of users to access a wireless communications network. Consequently, most service providers reflect the length of the message in the user's bill: reducing the length of text messages results in a concomitant reduction in the cost of transmitting the messages from sender to receiver.

Message length may be measured in bits (binary digits), characters, data packets, or duration, where a reduction in magnitude typically reduces cost. For example, many mobile telephony service providers offer SMS and charge for each data packet delivered, where a packet is limited to some threshold number of characters (often about 160 characters). If a message having more than the threshold number of characters is to be sent or received, then several packets are needed, which increases the cost.

Data entry of lengthy text messages on many SMS enabled devices is generally more inconvenient and awkward than typing the same message on a standard QWERTY keyboard. The creation of textual messages on devices with a limited number of keys, typical mobile telephones for example, can be frustrating - requiring several keystrokes per character. The added keystrokes take time and require the user's full attention. The physical difficulty of data entry may be substantially eased by improved data entry systems such as the system proposed in co-pending European Patent Application (Attorney Docket No. 2001P02560/EP) or the alternative data entry devices proposed in co-pending European Patent Application (Attorney Docket No. 2001P02562/EP).

Reduction of message length can be achieved by applying mathematical information compression techniques. Alternatively, and less computationally intensively, discrete, manual, ad hoc methods can be used to shorten messages between two communicating users.

Mathematical compression techniques, including Huffman coding, deflation and LZW compression, reduce the size of a message prior to transmission and can convert the transmitted data back to the original message after reception ("un-compress" or "decode"). Compression techniques are effective but they are characteristically incomprehensible in their compressed form to human readers. Indeed, under many compression algorithms, the compressed form of a message can not be transcribed directly into a sequence of purely alphabetic characters: many compression algorithms make use of the full range of binary code and are not even limited to standard set of ASCII characters.

Mathematical compression techniques are of great value at the level of transmitting individual bits of data over a wireless or wired communications network but are of less value at the level of the actual message displayed to the user upon receipt. A person can not reasonably be expected to read or write a mathematically compressed message unaided - such messages require computer support to decode the message upon receipt.

Ad hoc methods, on the other hand, generally depend on users for encoding and decoding messages. A classic example of an ad hoc code might be the use of (human readable) abbreviations in telegraphic messages. Further examples include the use of conventional abbreviations and phonetic spelling. An advantage of ad hoc methods is that the code words can be both read and written by a human user, once the human user concerned has mastered the code being used. Human readable codes or abbreviations allow the use of typical communication media without special support. One disadvantage of a simple implementation of ad hoc methods is that the users must either memorise the meaning of the code words or they must consult a translation dictionary. In the case of telegraphic abbreviations, the translation dictionary is known as a telegraphic code book.

Certain ad hoc methods can and do rely on common abbreviations or non-standard grammar. For example, an internet user might type "FYI Jane is OK, saw her Xmas. CU L8R" with certainty that the message will be read as "For your information, Jane is alright, I saw her at Christmas. See you later!". The number of readily memorised abbreviations is relatively limited and can result in misunderstandings: IP can mean "intellectual property" and "internet protocol", for example.

In a similar fashion to the text messages of today, telegraphic messages were traditionally charged for by the word and message length was at a premium. To address the need for shorter and less wordy messages, telegraphic code books were developed. Telegraphic code books were applied first to wired telegraphy in the late 1800s but continued to be used in wireless telegraphy. The use of code books resulted in a substantial reduction in message length and in the all important word count. Each code word would replace an average of 6 plain words but some later commercial codes. allowed code words to replace almost 28 words on average, see p. 45 *"The Invisible Weapon:*
*Telecommunications and International Politics, 1851-1945",* Daniel R. Headrick.

Eventually the telegraphic industry standardised their code books to provide code books comprising only five-letter code words, partly in order to reduce redundancy in messages, but also to give a degree of resistance to transmission error.

Hundreds of commercial telegraphic code books were published with emphasis on cost reduction through reduction in the number of words. A reduction in length of messages was a desirable byproduct. Some code books sought to address secrecy issues whether commercial or diplomatic. A more complete discussion of the history of telegraphic codes and code books may be found in Headrick (see above) or *"The Code Breakers"* by David Kahn, chapters 6 - 9 and 22.

A drawback of telegraphic code books was that both sender and recipient had to be working from the same code book. Pre-published code books were often widely, even internationally, distributed to address just this disadvantage: code books, for instance *Marconi's International Register* and the *ABC Code,* were made generally available so that both sender and recipient could work from the same code book.

Telegraphic code books provide substantial reductions in message length and are applicable to a large number of possible messages. To further enhance their applicability, spare code words were often deliberately left at the ends of some code books so that users could agree their own ad hoc assignments of messages to code words. Users could of course go one step further and create a whole code book to suit their particular needs, so for example, when the Australian National Antarctic Research Expedition (ANARE) wanted a code book they included many code words which correspond to messages relating to local flora and fauna, places of interest, etc. Using the standard five-letter code word structure, the ANARE code book allows highly laconic messages which would not generally be found in a commercial telegraphic code book: for instance "WUVNE" means "Penguins have begun to arrive on the island". User-defined code books allow groups to continue to use existing conventions, and not be dependent on manufacturers.

Telegraphic code books have also found extensive use in communicating in languages having multiple non-European characters, for example Chinese or Japanese. Notably, telegraphic code books have been widely used in China simply because conventional Chinese characters are not directly usable in telegraphic communication. In the Chinese example, a code book permits a relatively simple transliteration of the original Chinese character into, for example, a standardised code word expressed in telegraph- or network-transmissible digits.

As outlined above, messages encoded by mathematical compression techniques are not human-readable and thus make manual decoding disproportionately time-consuming. On the other hand simple ad hoc methods are limited, inconsistent and wholly reliant on the whim and foresight of the creator of the abbreviation or code book.

It is therefore an object of the invention to obviate or at least mitigate the aforementioned problems.

In accordance with one aspect of the present invention, there is provided an electronic text messaging system suitable for communicating text messages in a coded form over a transmission medium, the system comprising: a transmitting apparatus for transmitting coded messages, each coded message comprising at least one code word; and a receiving apparatus for receiving the coded messages, decoding the coded messages and outputting the decoded messages, characterised in that the receiving apparatus comprises: a first memory unit, wherein a text messaging program is stored; and a target device which has at least one receiver component, at least one first feedback component and first processing logic, the target device being connectable to the first memory unit and the text messaging program running on the first processing logic, the text messaging program having a code book data table, a parsing functionality and a decoding functionality, wherein each coded message is parsed and decoded into a plain text message by the text messaging program with reference to the code book data table, each code word of the coded message corresponding to at least one plain text fragment.

Preferably the at least one first feedback component includes a display device and the plain text message is displayed on the display device.

Advantageously the at least one first feedback component may include an audio feedback device and the plain text message may be reproduced audibly by the audio feedback device.

The first memory unit may be integral with the target device. Alternatively the first memory unit may be external to the target device and connectable to the target device via an interface arrangement. The interface arrangement may be a docking slot provided upon the target device and the target device may engage the first memory unit within said docking slot.

The transmitting apparatus preferably comprises a sending device which has: at least one data entry component, which allows the inputting of text messages for transmission; second processing logic for processing the input messages; and at least one transmitter component, for transmitting said input messages.

The transmitting apparatus advantageously further comprises a second memory unit upon which a further text messaging program is stored, the further text messaging program having a code book data table, a plain text parsing functionality and an encoding functionality, the sending device being connectable to the second memory unit and the second processing logic being operated according to the further text messaging program, the text messages for transmission are input as plain text and the further text messaging program runs on the second processing logic, parses the input plain text into at least one plain text fragment, encodes the or each said plain text fragment into at least one code word with reference to the code book data table, and combines all encoded plain text fragments in a coded message, each code word of the coded message corresponding to at least one plain text fragment.

The second memory unit may be integral with the sending device. Alternatively the second memory unit may be external to the sending device and connectable to the sending device via an interface arrangement. The interface arrangement may be a docking slot provided upon the sending device and the target device may engage the second memory unit within said docking slot.

Conveniently the sending device may further comprise at least one feedback component, the or each said feedback device providing a sender with feedback relating to the contents of said input messages.

The transmission medium may be either a wireless network or a wired network.

Preferably, the code book data table of the text messaging program is identical to the code book data table of the further text messaging program.

Advantageously the target device further comprises: at least one data entry component, which allows the inputting of text messages for transmission; and at least one transmitter unit, for transmitting said input messages; the text messaging program of the receiving apparatus has encoding functionality and plain text parsing functionality; and the text messaging program parses the input plain text into at least one plain text fragment, encodes the or each said plain text fragment into at least one code word with reference to the code book data table, and combines all encoded plain text fragments in a coded message.

In accordance with a further aspect of the present invention, there is provided a method for receiving and decoding coded text messages on a receiving apparatus, the receiving apparatus having access to a code book data table, the method comprising: receiving a message coded according to code words contained in the code book data table; parsing the code words of the coded message; for each parsed code word, finding an entry in the code book data table for said parsed code word, retrieving a corresponding plain text fragment, and outputting said corresponding plain text fragment; combining all corresponding plain text fragments into a decoded text message; and reproducing the decoded text message.

Each parsed code word advantageously corresponds to at least one corresponding plain text fragment and which of said corresponding plain text fragments is retrieved may depend on context.

In accordance with yet a further aspect of the present invention, there is provided a method for encoding and transmitting text messages on a transmitting apparatus, the transmitting apparatus having access to a code book data table, the method comprising: inputting a text message to be encoded; parsing the text message into at least one text fragment; for each parsed text fragment, finding an entry in the code book data table for said parsed text fragment, retrieving a corresponding code word entry, and outputting said corresponding code word entry; combining said corresponding code word entries into a coded text message; and transmitting the coded text message.

Each plain text fragment may advantageously correspond to at least one corresponding code word entry and which of said corresponding code word entries is retrieved is determined by a selection algorithm.

Preferably the text message may be parsed into said at least one text fragment according to a parsing algorithm.

Alternatively the text message may be parsed into said at least one text fragment by a human user. The method may then further comprise: for any parsed text fragment which lacks a corresponding code word, outputting said parsed text fragment unaltered. The method may further comprise: whenever said parsed text fragment is output unaltered, reproducing at least one suggested alternative parsing of said parsed text fragment in accordance with a parsing algorithm.

Advantageously the code book data table may be extensible and the text messaging program may have a training functionality, whereby a user may define at least one correspondence between a given code word and a user selected plain text fragment.

In accordance with yet another aspect of the present invention, there is provided a method of communicating text messages in a coded form, where both sender and receiver have access to identical versions of a code book data table, the method comprising: encoding and transmitting text messages on a transmitting apparatus in accordance with the encoding and transmitting method outlined above; and receiving and decoding coded text messages on a receiving apparatus in accordance with the receiving and decoding method outlined above.

The invention seeks to reduce message length by incorporating a code book program and a code book storage area in mobile textual message devices (for example, radio telephones or pagers) and in fixed stations in contact with mobile devices (for example base stations or wireless cell hubs). The invention seeks to facilitate electronic code books which are suitable and convenient for use with mobile electronic textual message devices.

Incorporating an electronic code book into mobile telephones and/or pagers has the advantage of reducing message length and thus increasing the number of messages which can be transmitted over a communications network. Furthermore, the creation of textual messages can be made faster and more convenient since fewer keystrokes are needed, even on devices having only a limited number of keys or that are operated with one hand, for example the alternative data entry devices proposed in co-pending European Patent Application (Attorney Docket No. 2001P02562/EP).

Office and home telephones may be provided with an electronic code book in order to communicate more effectively with mobile telephones and pagers that themselves incorporate copies of the same electronic code books.

Computerised compression and expansion of messages is implemented to increase overall accuracy, speed and convenience of text messaging. A person sending a message from a suitably arranged transmitting electronic device can use search functions to find the appropriate code word. Alternatively the sender can simply browse through a list or hierarchy of pre-existing options and pick components of the desired message.

Conversely, with a suitably arranged receiving electronic device, the person receiving a message can have it automatically translated and never have to deal with the code word. The use of the telegraphic code book can therefore become invisible to the receiving person. In some cases the electronic device may function solely as a receiving device. A receiving electronic device need have no data entry facility whatsoever but may still be provided with an electronic code book for decoding incoming coded messages. A pager is an example of a suitable receiving electronic device.

It is advantageous to adopt a standard textual notation in order that coded messages can be transcribed manually for later decipherment (for example "off-line" decipherment) or for redirection to others. Since the implementation of electronic code books can be made independent of the messaging itself, devices provided with electronic code books can clearly communicate with devices which either have no code book installed or for which the code book program has been disabled. In such cases the message will be received in coded form and the user of the non-enabled device must perform the encoding or decoding manually, or with the assistance of some other facility, for example an independent PDA, a desktop computer, a physical code book, a bound dictionary or even a telephone call to a call centre with access to a code book. In the latter example, a mobile telephony provider could charge a distinct rate for access to such a call centre.

As with telegraphic code books it is possible to provide "empty slots" for the user to define as appropriate. Naturally the user will need to disseminate any user-defined code words to any intended recipient of messages using these user-defined code words. The code book can thus be extended manually, semi-automatically or automatically in response to new messages. Although a fixed, published or pre-configured code book can be convenient, there are situations in which a more personalised code book will be more appropriate.

In addition to allowing a user to define which text fragments correspond to which code words, the code book program may also be arranged to follow other user-defined rules. The user may, for instance, train the code book program to parse text fragments in a preferred way or to represent user-determined code words symbolically as opposed to textually (a bitmap instead of a text fragment). The code book program could thus be said to learn new rules from the user.

It is noted that by incorporating the telegraphic code book into an electronic device the weight of the overall electronic messaging system is comparatively less than a more primitive system of telephone and printed code book. Furthermore, the pre-existing processor logic and display apparatus of the telephone can be used to interface with the code book module making the system less cumbersome and more portable.

All or part of the code book may be stored upon non-volatile memory devices, for instance read-only memory (ROM) devices. ROM provides a stable and relatively incorruptible source of information whilst being simple to install and cheap to implement.

Alternatively or additionally, all or part of the code book may be stored upon volatile memory devices, for instance random access memory (RAM) devices. Use of volatile memory lends flexibility: in this instance, new code books or code words can be added with little or no trouble and with minimal wastage.

In either case the memory devices may provided: integrally with the electronic device, for example as a ROM chip; externally from the electronic device, for example as the permanent memory of a base station, computer or PDA with which the electronic device may communicate; or memory devices may be provided as removable memory devices including PCMCIA cards, smart cards and memory cards.

Telephones can be configured to load (upload and/or download) their code books through any of a great range of interfaces. Suitable interfaces include: wireless interfaces using radio or infrared communications; wired interfaces where the telephone is provided with docking slots for plugging in wires from devices carrying the desired code book information and/or docking slots for plugging in memory devices; or simply a user interface through an on-screen display. The provision of docking slots allows off-line configuration and distribution of code books.

When implemented in electronic devices for users whose language has a large number of written characters, for instance Chinese or Japanese, the incorporation of electronic code books into telephones enhances usability. Electronic code books may thus be particularly useful in this context.

For a better understanding of the present invention, reference will now be made, by way of example only, to the accompanying drawings in which:-
- Figure 1: shows a block diagram of an electronic device within which an electronic code book may suitably be installed;
- Figure 2: shows a mobile telephone device having an electronic code book and displaying both coded and decoded messages;

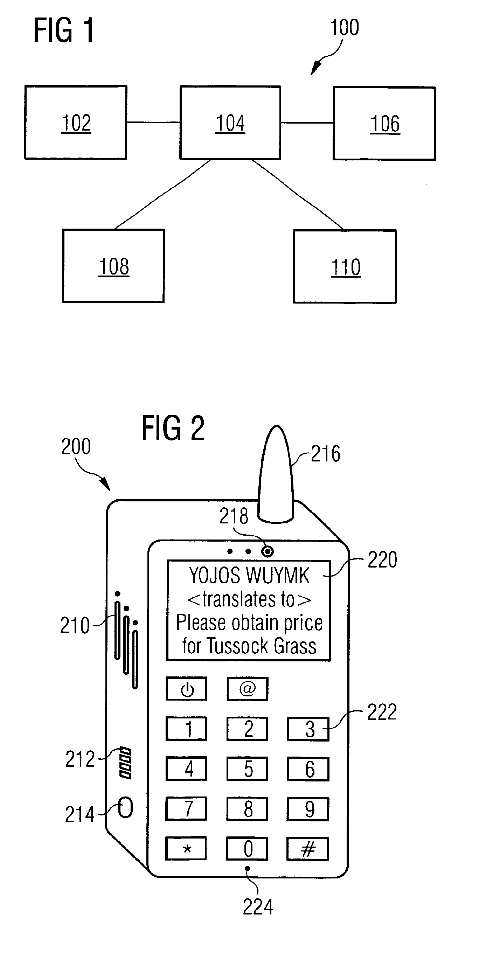

Figure 1 shows a block diagram of an electronic device 100 within which an electronic code book according to the present invention may be installed. The device 100 includes processing logic 104, input apparatus 102 and output apparatus 106. Both input apparatus 102 and output apparatus 106 are under the control of the processing logic 104. The processing logic 104 is provided with an electronic code book program which allows the user to receive and then decode messages which have been encoded using a code book having identical entries. The electronic code book program can be held on volatile and/or non-volatile storage media. Storage media may either be integral to the device, remote from the device or disposed on removable media, for instance Smart cards or Multimedia Cards, which may be attached to the device when code book functionality is required.

Figure 2 shows a mobile telephone 200 with an electronic code book stored therein. The telephone 200 has display apparatus 220 for presenting user information including text messages (whether encoded or in plain text). The display apparatus 220 can show encoded text messages in the form in which they were transmitted. Alternatively or additionally, the display apparatus 220 can show the equivalent text message in plain text, once the coded message has been decoded. The display apparatus 220 can also be used when editing the code book or when browsing the code book, with or without intent to send a message.

It is observed that the code words need not be in one-to-one correspondence with plain text: two code words might for instance represent the same, commonly used phrase in plain text. Which of a plurality of possible code words to select may be decided upon by the user or in accordance with a selection algorithm, for example alternation between two options or random selection.

Alternatively, rather than rely wholly on the code words to carry information one can arrange that their context can also carry information about alternative interpretations, thus the code word for "in an hour" could be rendered as the result of a calculation adding one hour to the send time of the message, or the code word for "see you tomorrow" as " see you on Tuesday". Context is not limited to time or day, the code word for "I am at work" could be rendered either "I am at work" or as "I am at" followed by a stored address, depending on whether the receiver's device has had the work address of the sender stored upon it.

The control input apparatus of the telephone in Figure 2 includes a keypad 222, however control input can be achieved using many alternative types of input device, for example voice recognition apparatus, touch sensitive display apparatus or the data input arrangements proposed in co-pending application 2001P02562/EP. The keypad 222 can be used to edit messages and code books. Furthermore the keypad 222 can direct the display of messages and code words upon the display apparatus 220.

An antenna 216 is provided for receiving or transmitting messages. Additionally the device in Figure 2 is provided with photo cells 214, electrical contacts 212 and storage media docking slots 210 any of which can be used to receive or transmit code books or updated code words for addition to stored code books. The antenna 216 may also be adapted to receive updated code books.

Audio feedback may be provided by routing the output from the electronic code book program through a voice synthesis device and the speaker so that code book messages are read out aloud to the user. As has become conventional in mobile telephony, all functions, including decode and/or encode functions, can be made subject to authorisation.

Automated telegraphic code books can be incorporated in mobile telephones, fixed telephones, and pagers. There need not be any external indication of the presence of a code book.

As may be apparent from the preceding discussion, it should be understood that while text-based messaging is generally a matter of addressing a message from a single sender to a single target receiver, many forms of transmission, in particular wireless forms, allow a message to be broadcast to all suitable receivers or "narrowcast" to a selected group of receivers. The present invention does not exclude the possibility of a plurality of suitable receivers each receiving the same coded messages.

While the preceding discussion is concerned with the provision of a single electronic code book, it will be apparent that the same discussion applies equally to the provision of a plurality of code books which may share part or all of their contents with one another or may be mutually exclusive and incompatible. The particular code book according to which the messages will be communicated may be selected from among the plurality of code books automatically (by the electronic text messaging system) or manually (by the user). The automatic selection of a particular code book may be dependent upon context or circumstance: depending upon, for example, the telephone number of either sender or target; the nationality of the service provider; the type of message being sent (this could include the MIME-type of the message); or a portion of the message itself can be arranged to inform the target device which code book to select. The automatic selection process could iterate through at least some of the known code books until an appropriate code book could be found.

## Claims

1. An electronic text messaging system suitable for communicating text messages in a coded form over a transmission medium, the system comprising:
a transmitting apparatus for transmitting coded messages, each coded message comprising at least one code word; and
a receiving apparatus for receiving the coded messages, decoding the coded messages and outputting the decoded messages,
**characterised in that** the receiving apparatus comprises:
a first memory unit, wherein a text messaging program is stored; and
a target device which has at least one receiver component, at least one first feedback component and first processing logic, the target device being connectable to the first memory unit and the text messaging program running on the first processing logic, the text messaging program having a code book data table, a parsing functionality and a decoding functionality,
wherein each coded message is parsed and decoded into a plain text message by the text messaging program with reference to the code book data table, each code word of the coded message corresponding to at least one plain text fragment.

2. An electronic text messaging system according to Claim 1, wherein the at least one first feedback component includes a display device and the plain text message is displayed on the display device.

3. An electronic text messaging system according to Claim 1, wherein the at least one first feedback component includes an audio feedback device and the plain text message is reproduced audibly by the audio feedback device.

4. An electronic text messaging system according to any one of the preceding claims, wherein the first memory unit is integral with the target device.

5. An electronic text messaging system according to any one of Claims 1 to 3, wherein the first memory unit is external to the target device and connectable to the target device via an interface arrangement.

6. An electronic text messaging system according to Claim 5, wherein the interface arrangement is a docking slot provided upon the target device and wherein the target device engages the first memory unit within said docking slot.

7. An electronic text messaging system according to any one of the preceding claims, wherein the transmitting apparatus comprises a sending device which has:
at least one data entry component, which allows the inputting of text messages for transmission;
second processing logic for processing the input messages; and
at least one transmitter component, for transmitting said input messages.

8. An electronic text messaging system according to Claim 7,
wherein the transmitting apparatus further comprises a second memory unit upon which a further text messaging program is stored, the further text messaging program having a code book data table, a plain text parsing functionality and an encoding functionality, the sending device being connectable to the second memory unit and the second processing logic being operated according to the further text messaging program,
wherein the text messages for transmission are input as plain text and
wherein the further text messaging program runs on the second processing logic, parses the input plain text into at least one plain text fragment, encodes the or each said plain text fragment into at least one code word with reference to the code book data table, and combines all encoded plain text fragments in a coded message, each code word of the coded message corresponding to at least one plain text fragment.

9. An electronic text messaging system according to Claim 8, wherein the second memory unit is integral with the sending device.

10. An electronic text messaging system according to Claim 8, wherein the second memory unit is external to the sending device and connectable to the sending device via an interface arrangement.

11. An electronic text messaging system according to Claim 10, wherein the interface arrangement is a docking slot provided upon the sending device and wherein the target device engages the second memory unit within said docking slot.

12. An electronic text messaging system according to any one of Claims 7 to 11, wherein the sending device further comprises at least one feedback component, the or each said feedback device providing a sender with feedback relating to the contents of said input messages.

13. An electronic text messaging system according to any one of the preceding claims, wherein the transmission medium is a wireless network.

14. An electronic text messaging system according to any one of Claims 1 to 12, wherein the transmission medium is a wired network.

15. An electronic text messaging system according to any one of Claims 8 to 14, wherein the code book data table of the text messaging program is identical to the code book data table of the further text messaging program.

16. An electronic text messaging system according to Claim 15, wherein the target device further comprises: at least one data entry component, which allows the inputting of text messages for transmission; and at least one transmitter unit, for transmitting said input messages,
wherein the text messaging program of the receiving apparatus has encoding functionality and plain text parsing functionality,
and wherein the text messaging program parses the input plain text into at least one plain text fragment, encodes the or each said plain text fragment into at least one code word with reference to the code book data table, and combines all encoded plain text fragments in a coded message.

17. An electronic text messaging system according to any one of the preceding claims wherein the code book data table is extensible and wherein the text messaging program has a training functionality whereby a user defines at least one correspondence between a given code word and a user selected plain text fragment.

18. A method for receiving and decoding coded text messages on a receiving apparatus, the receiving apparatus having access to a code book data table, the method comprising:
receiving a message coded according to code words contained in the code book data table; parsing the code words of the coded message; for each parsed code word, finding an entry in the code book data table for said parsed code word, retrieving a corresponding plain text fragment, and outputting said corresponding plain text fragment;
combining all corresponding plain text fragments into a decoded text message; and
reproducing the decoded text message.

19. A method for receiving and decoding coded text messages as claimed in Claim 17, wherein each parsed code word corresponds to at least one corresponding plain text fragment and wherein which of said corresponding plain text fragments is retrieved depends on context.

20. A method for encoding and transmitting text messages on a transmitting apparatus, the transmitting apparatus having access to a code book data table, the method comprising:
inputting a text message to be encoded;
parsing the text message into at least one text fragment;
for each parsed text fragment, finding an entry in the code book data table for said parsed text fragment, retrieving a corresponding code word entry, and outputting said corresponding code word entry;
combining said corresponding code word entries into a coded text message; and
transmitting the coded text message.

21. A method for encoding and transmitting text messages as claimed in Claim 19, wherein each plain text fragment corresponds to at least one corresponding code word entry and wherein which of said corresponding code word entries is retrieved is determined by a selection algorithm.

22. A method for encoding and transmitting text messages as claimed in Claims 19 or 20, wherein the text message is parsed into said at least one text fragment according to a parsing algorithm.

23. A method for encoding and transmitting text messages as claimed in Claims 19 or 20, wherein the text message is parsed into said at least one text fragment by a human user.

24. A method for encoding and transmitting text messages as claimed in Claim 22, wherein the method further comprises:
for any parsed text fragment which lacks a corresponding code word, outputting said parsed text fragment unaltered.

25. A method for encoding and transmitting text messages as claimed in Claim 23 wherein the method further comprises:
whenever said parsed text fragment is output unaltered, reproducing at least one suggested alternative parsing of said parsed text fragment in accordance with a parsing algorithm.

26. A method of communicating text messages in a coded form, where both sender and receiver have access to identical versions of a code book data table, the method comprising:
encoding and transmitting text messages on a transmitting apparatus in accordance with Claim 19; and
receiving and decoding coded text messages on a receiving apparatus in accordance with the method of Claim 17.
